# EUROPEAN PATENT APPLICATION

(11) **EP 1 750 263 A2**
(43) Date of publication of application: **07.02.2007**
(21) Application number: 06117630.1
(22) Date of filing: 21.07.2006
(51) Int. Cl.: G11B 20/10, G11B 7/0045

(54) **Information storage medium, and reproducing method and recording method therefor**

(30) Priority: 29.07.2005 JP 2005221097
(71) Applicant: KABUSHIKI KAISHA TOSHIBA, Tokyo 105-8001 (JP)
(72) Inventor: Umezawa, Kazuyo, c/o Toshiba Corporation, Minato-ku Tokyo 105-8001 (JP); Morita, Seiji, c/o Toshiba Corporation, Minato-ku Tokyo 105-8001 (JP); Takazawa, Koji, c/o Toshiba Corporation, Minato-ku Tokyo 105-8001 (JP); Ando, Hideo, c/o Toshiba Corporation, Minato-ku Tokyo 105-8001 (JP); Ootera, Yasuaki, c/o Toshiba Corporation, Minato-ku Tokyo 105-8001 (JP); Morishita, Naoki, c/o Toshiba Corporation, Minato-ku Tokyo 105-8001 (JP)
(74) Representative: Henkel, Feiler & Hänzel

(57) **Abstract**

According to one embodiment, an information storage medium comprising a substrate (10) having a groove in a form of concentric circle or spiral and a recording film (12) formed on the substrate (10), wherein a change rate of signal level in reproduction of 1,000 times at a predetermined power is 0.1% or more and 1% or less.

## Description

One embodiment of the invention relates to an information storage medium such as an optical disc that enables recording and reproduction of information, and a reproduction method and recording method therefor.

With increase in capacity of information, further increase in capacity is currently required in the market also in optical discs.

Optical discs are roughly classified into three kinds of discs of ROM discs dedicated to reproduction, write-once R discs, and rewritable RW or RAM discs.

Current CD-R and DVD-R using a dye as a recording layer have a problem that when the same track is reproduced many times, a reflectance varies, the amplitude of a reproduction signal changes to decrease modulated amplitude, and the quality of a recorded data signal deteriorates. For improving the problem, various investigations have been conducted (Jpn. Pat. Appln. KOKAI Publication No. 1-99885 and WO 01/074600).

Jpn. Pat. Appln. KOKAI Publication No. 1-99885 describes that by adding an additive of high decomposition temperature, decomposition of a dye is suppressed, and deterioration of a reproduction signal of recorded data is suppressed. However, there is no reference to change in reflectance level and change in modulated amplitude of a recorded mark although the signal strength dependence ratio of a land portion is checked.

WO 01/074600 describes that if the maximum absorption wavelength λmax of a dye is ≤ 370 nm when the laser wavelength is 380 to 450 nm, high stability is maintained against repeated reading, but simultaneously, there is a fear of deterioration of recording sensitivity. Further, there is no reference regarding change in reflectance level and the like.

However, an experiment performed by the present inventors encountered the following problem. When data is recorded on an information storage medium using a dye recording layer and reproduction is performed 100,000 times for the same track, a signal level of a mark portion and a signal level of a space portion vary to decrease the modulated amplitude. It has been found that this problem is remarkable particularly when the laser wavelength used in recording is 450 nm or less, and the signal level of the mark portion and the signal level of the space portion are often different. Unless the modulated amplitude is maintained to a certain degree, S/N of a signal becomes small, and consequently, reading errors increase, and reliability of a disc is decreased.

If reproduction of 100,000 times or more is possible when the same track is reproduced, this is recognized as a sufficiently practical level as an information storage medium. When an experiment is conducted at a standard reproduction power, a test of very long time must be conducted, and performing of check of a disc becomes actually difficult. Thus, it can be expected possible to reproduce information at a higher power than the standard reproduction power, and to approximate a reproduction number at the standard reproduction power. However, even if reproduction is effected at a high power and properties such as a simulated pit error ratio (SbER) are estimated to exceed 100,000 times at the standard reproduction power, the following fact is found when a check is carried out actually at the standard reproduction power. That is, the modulated amplitude becomes smaller than the expected value even if the simulated pit error ratio (SbER) does not become problematical after reproduction of 100,000 times.

An object of the present invention is to solve these problems and to provide an information storage medium that suppresses variations in reflectance and in modulation degree of a signal even after performing reproduction for many times, and a reproduction method and recording method therefor.

According to one aspect of the present invention, there is provided an information storage medium comprising a substrate having a groove in the form of concentric circle or spiral and a recording film formed on the substrate, wherein a change rate of signal level in reproduction of 1000 times at a predetermined power is 0.1% or more and 1% or less.

According to another aspect of the present invention, there is provided a method of reproducing information recorded on an information storage medium, the medium comprising a substrate having a groove in the form of concentric circle or spiral and a recording film formed on the substrate, wherein a recording mark is formed by irradiation with a laser beam, and a change rate of signal level in reproduction of 1000 times at a predetermined power is 0.1% or more and 1% or less, the method comprising: irradiating the information storage medium with a laser beam; and reproducing the information based on reflected light of the irradiated laser beam.

According to still another aspect of the present invention, there is provided a method of recording information on an information storage medium, the medium comprising a substrate having a groove in the form of concentric circle or spiral and a recording film formed on the substrate, wherein a recording mark is formed by irradiation with a laser beam, and a change rate of signal level in reproduction of 1000 times at a predetermined power is 0.1% or more and 1% or less, the method comprising irradiating the information storage medium with a laser beam to record the information.

The invention can be more fully understood from the following detailed description when taken in conjunction with the accompanying drawings, in which:
FIG. 1 is an exemplary view showing a sectional structure of an information storage medium according to an embodiment of the present invention;
FIG. 2 is an exemplary view showing a waveform of a laser beam for use in evaluation of a reproduction property;
FIG. 3 shows an exemplary general structural formulae of compounds constituting a recording layer;
FIG. 4 shows an exemplary general structural formulae of compounds constituting a recording layer;
FIG. 5 shows an exemplary general structural formulae of compounds constituting a recording layer;
FIG. 6 shows an exemplary general structural formulae of compounds constituting a recording layer;
FIG. 7 shows an exemplary general structural formulae of compounds constituting a recording layer;
FIG. 8 shows an exemplary general structural formulae of compounds constituting a recording layer;
FIG. 9 shows an exemplary general structural formulae of compounds constituting a recording layer;
FIG. 10 shows an exemplary general structural formulae of compounds constituting a recording layer;
FIG. 11 shows an exemplary general structural formulae of compounds constituting a recording layer;
FIG. 12 shows an exemplary general structural formulae of compounds constituting a recording layer;
FIG. 13 is an exemplary general structural formula of an organometallic complex cation-anion U;
FIG. 14 is an exemplary general structural formula of an organometallic complex cation-anion W;
FIG. 15 is an exemplary general structural formula of an organometallic complex single body Y;
FIG. 16 is an exemplary general structural formula of an azo organometallic complex; and
FIG. 17 shows measurement results of the number of reproductions of dyes A to I, and a change rate of signal level at each reproduction power.

Various embodiments according to the invention will be described hereinafter with reference to the accompanying drawings. In general, according to one embodiment of the invention, an information storage medium comprising a substrate having a groove in a form of concentric circle or spiral and a recording film formed on the substrate and the medium, wherein a change rate of signal level in reproduction of 1,000 times at a predetermined power is 0.1% or more and 1% or less.

An information storage medium for realizing an embodiment of the present invention includes, for example, a transparent resin substrate formed in the form of disc from a synthetic resin material such as polycarbonate. The transparent resin substrate has a groove in the form of concentric circle or spiral formed thereon. The transparent resin substrate can be produced by injection molding using a stamper.

On the transparent resin substrate, a recording film containing an organic dye is formed so as to fill the groove. As the organic dye used to form the recording film, those having its maximum absorption wavelength range shifting toward longer wavelength than a recording wavelength (405 nm) are used. Those designed such that absorption does not disappear and appreciable light absorption is performed in the recording wavelength range are used.

Consequently, when focusing or tracking by a laser beam for recording is performed on a track before information recording, a light reflectance is low. Thereafter, a dye decomposition reaction occurs by the laser beam, and a light absorbance lowers, whereby a light reflectance at a recording mark portion increases. Accordingly, a so-called Low-to-High (hereinafter, described as L-H) property is realized in which the light reflectance at a recording mark portion formed by irradiation with a laser beam increases higher than the light reflectance before laser beam irradiation.

Due to generated heat, deformation occurs on a transparent resin substrate, particularly, at the bottom of a groove, in some cases. In this case, a phase difference may occur in reflected light.

The above-mentioned organic dye can be dissolved in a solvent to give a solution which can be easily applied on the surface of the transparent resin substrate by a spin coat method. In this case, by controlling a dilution ratio with a solvent and revolution in spin application, the film thickness can be managed with high precision.

The organic dye is composed of a dye portion and a counter ion (anion) portion. As the dye portion, a cyanine dye, styryl dye and the like can be used. In particular, a cyanine dye and styryl dye are suitable since control of the absorption ratio against the recording wavelength is easy.

The information storage medium used as an embodiment of the invention will be illustrated more specifically.

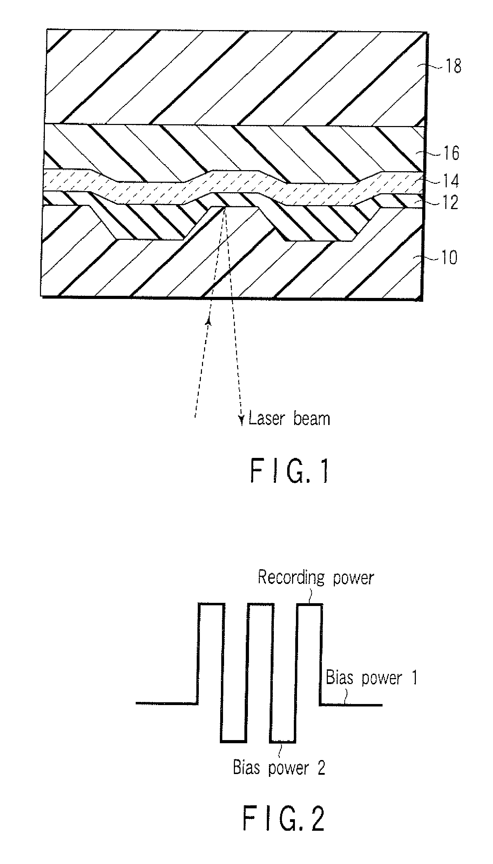

The information storage medium used in the embodiment of the invention has a structure in which an organic dye recording film 12 and a reflection film 14 are laminated sequentially on a transparent resin substrate 10 such as 0.6 mm thick polycarbonate, and another 0.6 mm thick transparent resin substrate 18 and a UV hardening resin 16 are pasted, as shown in FIG. 1.

Here, on the transparent resin substrate 10, a groove in the form of spiral having a track pitch of 0.4 µm and a depth of 60 nm is present. The groove is wobbled, and address information is recorded on the wobble.

On the transparent resin substrate 10, a 1.2 wt% TFP solution of an organic dye (dyes A to I described later) was applied by spin coating. The thickness of a dye after application from the bottom of the groove was 60 nm. The reflection film 14 made of an Ag alloy was laminated on the dye-applied substrate with a thickness of 100 nm by sputtering, and pasted with the 0.6 mm thick transparent resin substrate 18 by using the UV hardening resin 16. By using the information storage medium produced as described above, an experiment for evaluating a reproduction signal was performed.

The apparatus used for evaluation was an optical disc evaluation apparatus ODU-1000 manufactured by Pulstec Industrial Co., Ltd, and this apparatus had a laser wavelength of 405 nm and NA of 0.65. The linear velocity in recording and reproduction was 6.61 m/s. A recording signal was 8-12 modulated random data, and information was recorded by using a laser waveform containing a given recording power and two bias powers 1 and 2 as shown in FIG. 2.

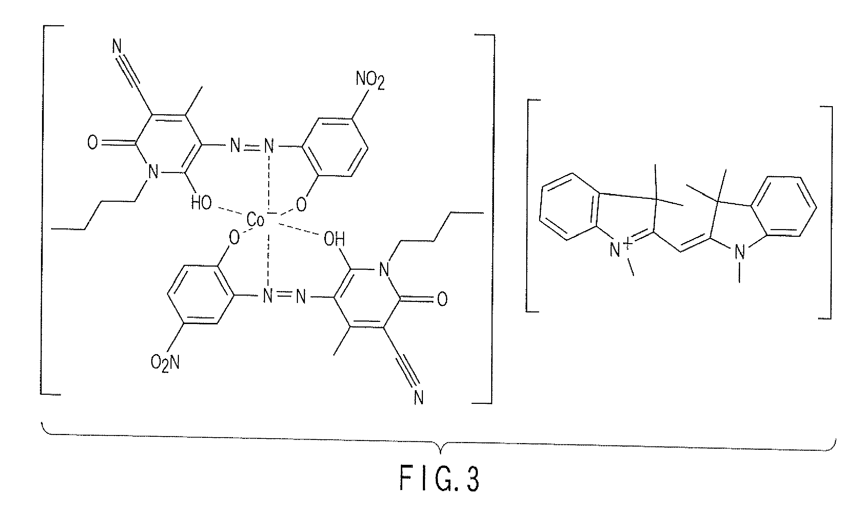

In this embodiment, an experiment was carried out for checking a reproduction possible number and a signal level change rate by use of dyes A to I showing excellent recording properties immediately after recording. General chemical formulae 1 to 10 of compounds regarding dyes A to I are shown in FIGS. 3 to 12.

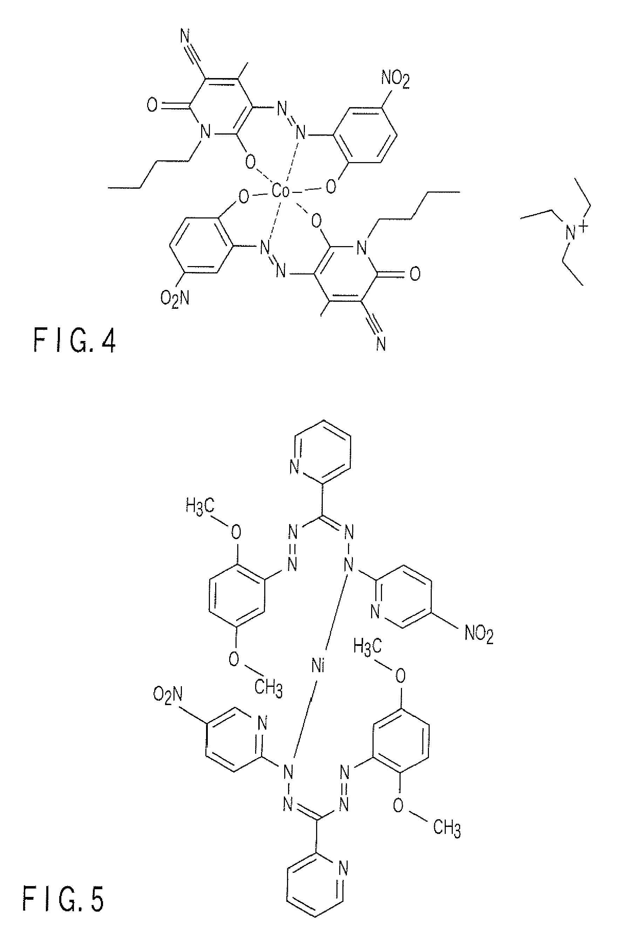

Dye A: [(formula 1 (FIG. 3)) 33% + (formula 2 (FIG. 4)) 67%] 85% + [(formula 3 (FIG. 5))] 15%

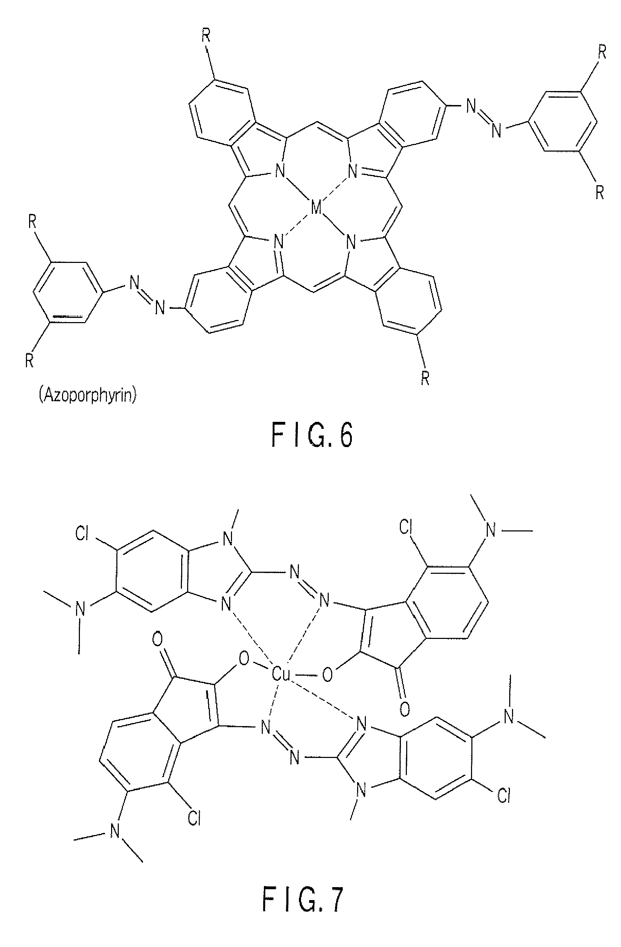

Dye B: (formula 1 (FIG. 3)) 28% + (formula 2 (FIG. 4)) 57% + (formula 4 (FIG. 6)) 15%

Dye C: (formula 1 (FIG. 3)) 33% + (formula 2 (FIG. 4)) 67%

Dye D: formula 5 (FIG. 7) (azo metallic complex)

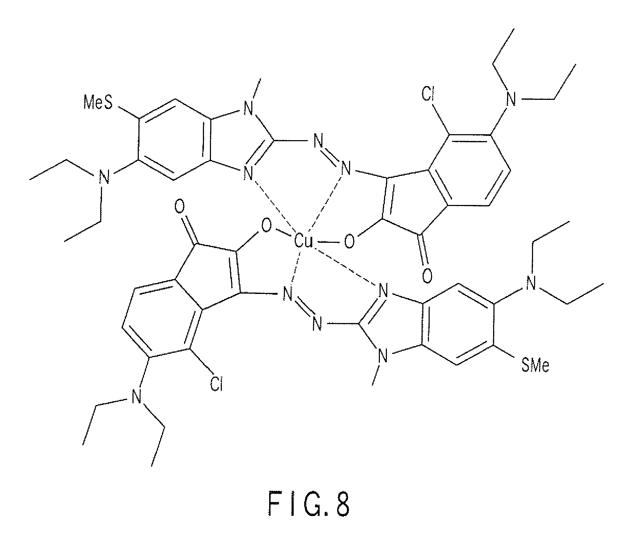

Dye E: formula 6 (FIG. 8) (azo metallic complex)

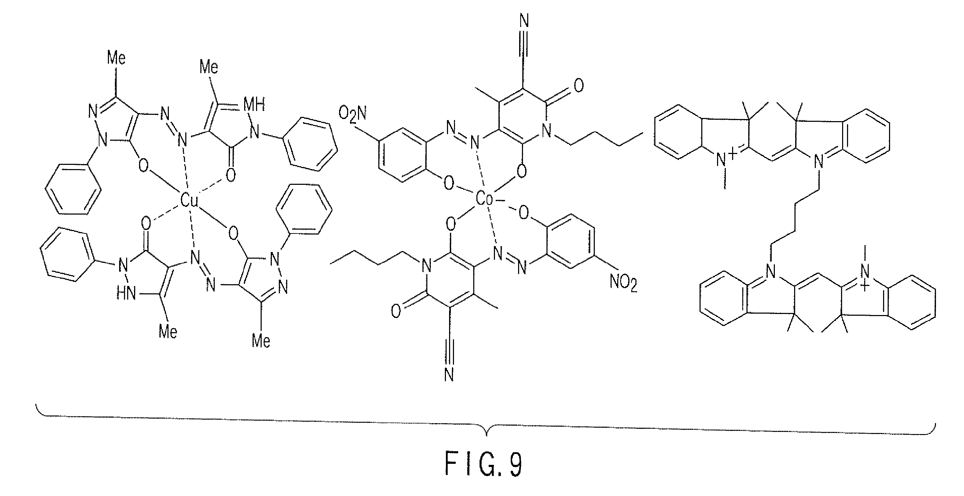

Dye F: formula 7 (FIG. 9) (azo metallic complex + organometallic complex cation-anion)

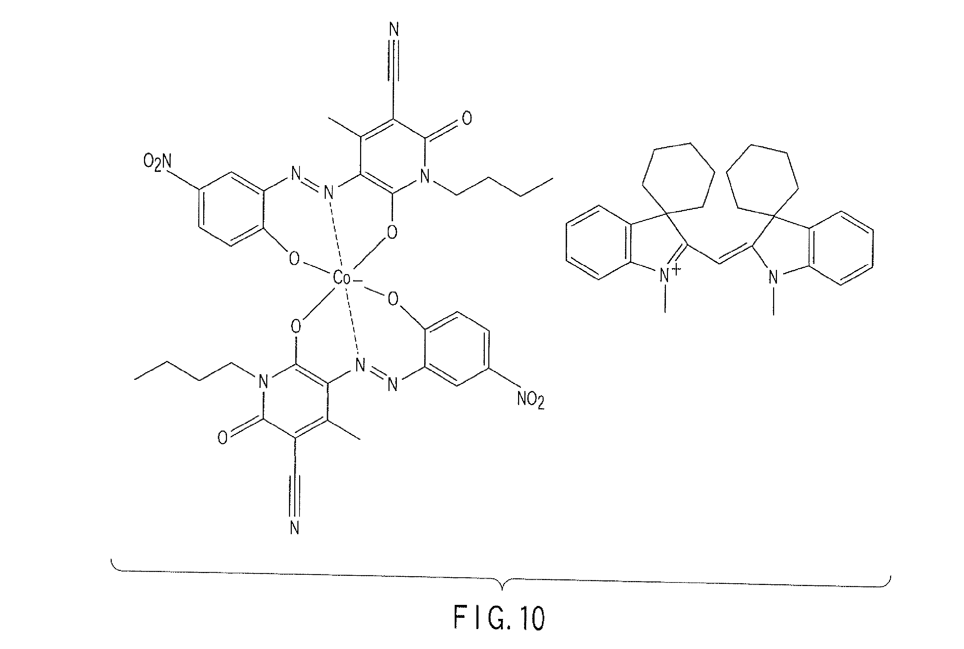

Dye G: formula 8 (FIG. 10) (organometallic complex cation-anion)

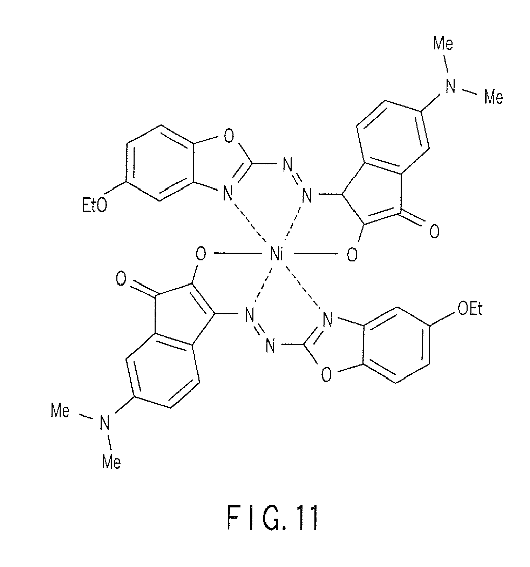

Dye H: formula 9 (FIG. 11) (azo metallic complex)

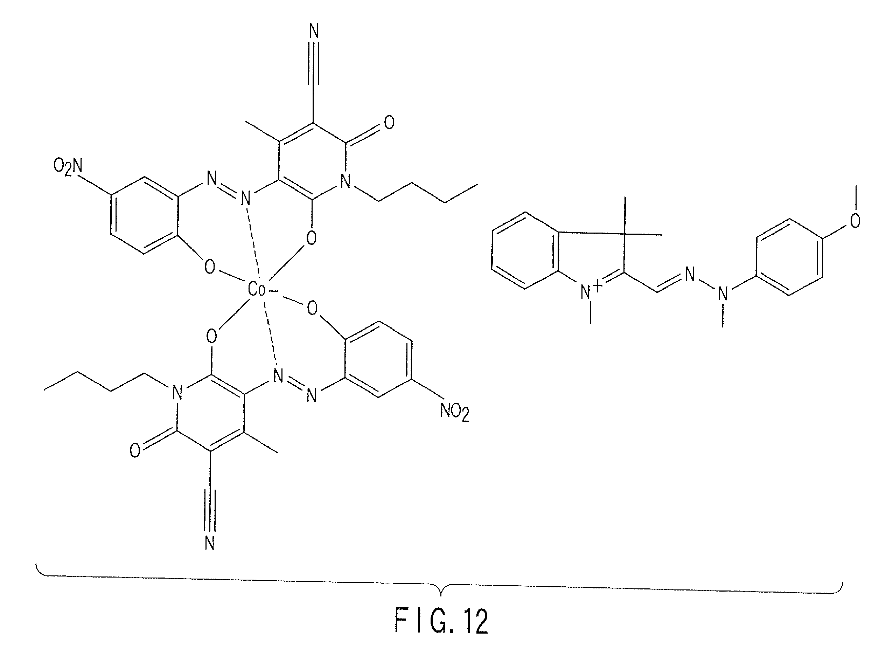

Dye I: (formula 10 (FIG. 12)) 28% + (formula 2 (FIG. 4)) 57% + (formula 4 (FIG. 6)) 15%

A chemical formula at the left side of each of chemical formulae 1, 2 and 10 represents an organometallic complex anion and a chemical formula at the right side thereof represents a cation.

A chemical formula at the left side of chemical formula 7 represents an azo metallic complex, a center chemical formula represents a cation, and a chemical formula at the right side represents an organometallic complex anion.

A chemical formula at the left side of chemical formula 8 represents a cation, and a chemical formula at the right side thereof represents an organometallic complex anion.

Here, dyes A, B and I are a mixed dye composed of an organometallic complex cation-anion U constituted of a cation and an organometallic complex anion, an organometallic complex cation-anion W constituted of a cation and an organometallic complex anion, and an organometallic complex single body Y or organometallic complex V.

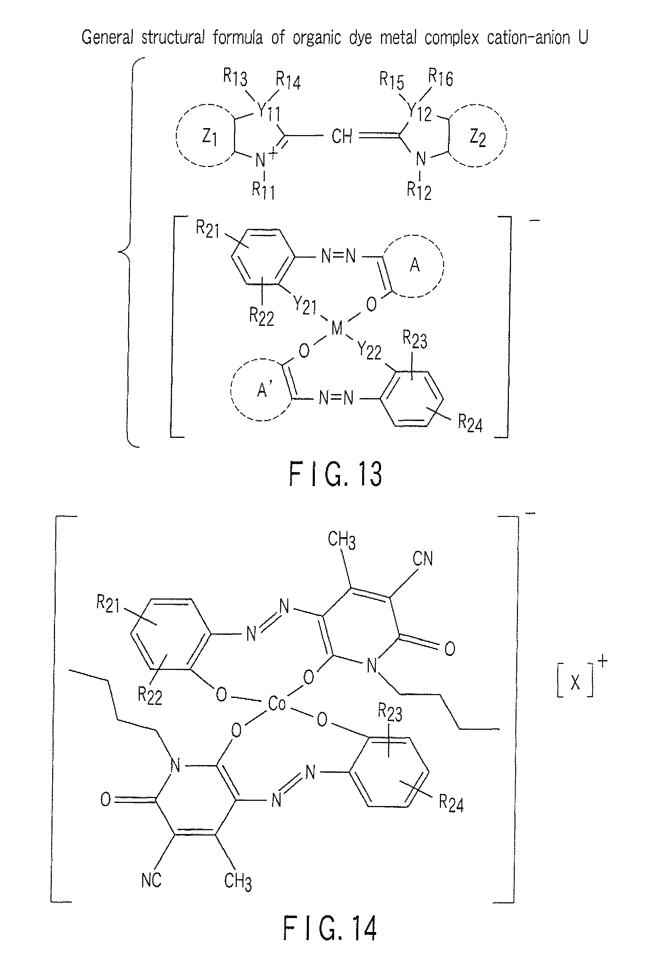

The general structural formulae of U, W, Y and V are shown in FIGS. 13, 14, 15 and 5, respectively.

Here, the cation portion in FIG. 13 is a monomethinecyanine dye, and the anion portion in FIG. 13 is an organometallic complex.

In the above-mentioned monomethinecyanine dye, Z₁ and Z₂ represent the same aromatic ring or mutually different aromatic rings, and these aromatic rings may have a substituent. Y₁₁ and Y₁₂ each represent independently a carbon atom or hetero atom. R₁₁ and R₁₂ represent an aliphatic hydrocarbon group, and these aliphatic hydrocarbon groups may have a substituent. R₁₃, R₁₄, R₁₅ and R₁₆ each represent independently a hydrogen atom or an appropriate substituent, and when Y₁₁ and Y₁₂ represent a hetero atom, part or all of R₁₃, R₁₄, R₁₅ and R₁₆ are absence.

In the above-mentioned organometallic complex, A and A' represent the same or mutually difference heterocyclic groups containing one or more of hetero atoms selected from a nitrogen atom, oxygen atom, sulfur atom, selenium atom and tellurium atom. R₂₁ and R₂₄ each represent independently a hydrogen atom or a substituent. Y₂₁ and Y₂₂ represent the same or mutually different hetero atoms selected from elements of XVI groups of the periodic table.

Examples of the monomethinecyanine dye used in this embodiment include dyes obtained by bonding of a cyclic nucleus of the same or mutually different imidazoline ring, imidazole ring, benzyimidazole ring, α-naphtoimidazole ring, β-naphtoimidazole ring, indole ring, isoindole ring, indolenine ring, isoindolenine ring, benzoindolenine ring, pydirinoindolenine ring, oxazoline ring, oxazole ring, isooxazole ring, benzooxazole ring, pyridinooxazole ring, α-naphtooxazole ring, β-naphtooxazole ring, selenazoline ring, selenazole ring, benzoselenazole ring, α-naphtoselenazole ring, β-naphtoselenazole ring, thiazoline ring, thiazole ring, isothiazole ring, benzothiazole ring, α-naphtothiazole ring, β-naphtothiazole ring, tetrazoline ring, tetrazole ring, benzotetrazole ring, α-naphtotetrazole ring, β-naphtotetrazole ring, and further, acridine ring, anthracene ring, isoquinoline ring, isopyrrole ring, imidanoxaline ring, indanedione ring, indazole ring, indaline ring, oxadiazole ring, carbazole ring, xanthene ring, quinazoline ring, quinoxaline ring, quinoline ring, coumarone ring, cyclohexanedione ring, cyclopentanedione ring, cinnoline ring, thiodiazole ring, thiooxazolidone ring, thiophene ring, thionaphthene ring, thiobarbituric acid ring, thiohydantoin ring, tetrazole ring, triazine ring, naphthalene ring, naphthilidine ring, piperazine ring, pyrazine ring, pyrazole ring, pyrazoline ring, pyrazolidine ring, pyrazolone ring, pyrane ring, pyridine ring, pyridazine ring, pyrimidine ring, pyrylium ring, pyrrolidine ring, pyrroline ring, pyrrole ring, phenazine ring, phenanethridine ring, phenanethrene ring, phenanethroline ring, phthalazine ring, pteridine ring, furazane ring, furane ring, purine ring, benzene ring, benzooxadine ring, benzopyrane ring, morpholine ring, rhodanine ring and the like which optionally have one or more substituents, to both ends of a monomethine chain optionally having one or more substituents.

In all of the general formulae of monomethinecyanine dyes, Z₁ to Z₃ represent an aromatic ring such as, for example, a benzene ring, naphthalene ring, pyridine ring, quinoline ring, and quinoxaline ring, and these aromatic rings may have one or more substituents. Examples of the substituent include aliphatic hydrocarbon groups such as a methyl group, trifluoromethyl group, ethyl group, propyl group, isopropyl group, butyl group, isobutyl group, sec-butyl group, tert-butyl group, pentyl group, isopentyl group, neopentyl group, tert-pentyl group, 1-methylpentyl group, 2-methylpentyl group, hexyl group, isohexyl group, 5-methylhexyl group, heptyl group, and octyl group; alicyclic hydrocarbon groups such as a cyclopropyl group, cyclobutyl group, cyclopentyl group, and cyclohexyl group; aromatic hydrocarbon groups a phenyl group, biphenyl group, o-tolyl group, m-tolyl group, p-tolyl group, xylyl group, mesityl group, o-cumenyl group, m-cumenyl group, and p-cumenyl group; ether groups such as a methoxy group, trifluoromethoxy group, ethoxy group, propoxy group, isopropoxy group, butoxy group, sec-butoxy group, tert-butoxy group, pentyloxy group, phenoxy group, and benzoyloxy group; ester groups such as a methoxycarbonyl group, trifluoromethoxycarbonyl group, ethoxycarbonyl group, propoxycarbonyl group, acetoxy group, and benzoyloxy group; halogen groups such as a fluoro group, chloro group, bromo group, and iodo group; thio groups such as a methylthio group, ethylthio group, propylthio group, butylthio group, and phenylthio group; sulfamoyl groups such as a methylsulfamoyl group, dimethylsulfamoyl group, ethylsulfamoyl group, diethylsulfamoyl group, propylsuitamoyl group, dipropylsulfamoyl group, butylsulfamoyl group, and dibutylsulfamoyl group; amino groups such as a primary amino group, methylamino group, dimethylamino group, ethylamino group, diethylamino group, propyl amino group, dipropylamino group, isopropylamino group, diisopropylamino group, butylamino group, dibutylamino group, and piperidino group; carbamoyl groups such as a methylcarbamoyl group, dimethylcarbamoyl group, ethylcarbamoyl group, diethylcarbamoyl group, propylcarbamoyl group, and dipropylcarbamoyl group; and further, a hydroxy group, carboxy group, cyano group, nitro group, sulfino group, sulfo group, and mesyl group. In the general formulae, Z₁ and Z₂ may be the same or mutually different.

Y₁₁ and Y₁₂ in the general formula of the monomethinecyanine dye represent a carbon atom or hetero atom. Examples of the hetero atom include XV group atoms and XVI group atoms in the periodic table such as a nitrogen atom, oxygen atom, sulfur atom, selenium atom, and tellurium atom. The carbon atom in Y₁₁ and Y₁₂ may be an atomic group composed mainly of two carbon atoms such as an ethylene group and vinylene group. Y₁₁ and Y₁₂ in the general formula of the monomethinecyanine dye may be the same or different.

R₁₁, R₁₂ and R₁₃ in the general formula of the monomethinecyanine dye each represent an aliphatic hydrocarbon group. Examples of the aliphatic hydrocarbon group include a methyl group, ethyl group, propyl group, isopropyl group, isopropenyl group, 1-propenyl group, 2-propenyl group, butyl group, isobutyl group, sec-butyl group, tert-butyl group, 2-butenyl group, 1,3-butadienyl group, pentyl group, isopentyl group, neopentyl group, tert-pentyl group, 1-methylpentyl group, 2-methylpentyl group, 2-pentenyl group, hexyl group, isohexyl group, 5-methylhexyl group, heptyl group, and octyl group. The aliphatic hydrocarbon group may be one or more substituents which are the same groups as in Z₁ to Z₃.

R₁₁ and R₁₂ in the general formula of the monomethinecyanine dye may be the same or different.

R₁₃ to R₁₆ in the general formula of the monomethinecyanine dye each represent independently a hydrogen atom or an appropriate substituent in each general formula. Examples of the substituent include aliphatic hydrocarbon groups such as a methyl group, trifluoromethyl group, ethyl group, propyl group, isopropyl group, butyl group, isobutyl group, sec-butyl group, tert-butyl group, pentyl group, isopentyl group, neopentyl group, tert-pentyl group, 1-methylpentyl group, 2-methylpentyl group, hexyl group, isohexyl group, 5-methylhexyl group, heptyl group, and octyl group; ether groups such as a methoxy group, trifluoromethoxy group, ethoxy group, propoxy group, butoxy group, tert-butoxy group, pentyloxy group, phenoxy group, and benzoyloxy group; halogen groups such as a fluoro group, chloro group, bromo group, and iodo group; and further, a hydroxy group, carboxy group, cyano group, and nitro group. In the general formula of the monomethinecyanine dye, part or all of R₁₃ to R₁₆ in Z₁ and Z₂ are absence when Y₁₁ and Y₁₂ represent a hetero atom.

In the general formula of the azo metallic complex which is an organometallic complex at an anion portion in the above-mentioned organometallic complex, A and A' represent the same or mutually different 5-membered to 10-membered heterocyclic rings such as a furyl group, thienyl group, pyrrolyl group, pyridyl group, piperidino group, piperidyl group, quinolyl group, and isooxazolyl group, containing one or more hetero atoms selected from a nitrogen atom, oxygen atom, sulfur atom, selenium atom and tellurium atom. This heterocyclic group may have one or more substituents such as, for example, aliphatic hydrocarbon groups such as a methyl group, trifluoromethyl group, ethyl group, propyl group, isopropyl group, butyl group, isobutyl group, sec-butyl group, tert-butyl group, pentyl group, isopentyl group, neopentyl group, tert-pentyl group, 1-methylpentyl group, 2-methylpentyl group, hexyl group, isohexyl group, and 5-methylhexyl group; ester groups such as a methoxycarvonyl group, trifluoromethoxycarbonyl group, ethoxycarbonyl group, propoxycarbonyl group, acetoxy group, trifluoroacetoxyl group, and benzoyloxyl group; aromatic hydrocarbon groups a phenyl group, biphenyl group, o-tolyl group, m-tolyl group, p-tolyl group, o-cumenyl group, m-cumenyl group, p-cumenyl group, xylyl group, mesityl group, styryl group, cinnamoyl group, and naphtyl group; and further, a carboxy group, hydroxy group, cyano group, and nitro group.

The azo compound constituting the azo-based organometallic complex represented by the general formula can be obtained in the usual manner by reacting a diazonium salt having R₂₁ and R₂₂ or R₃₂ and R₂₄ corresponding to the general formula, with a heterocyclic compound such as, for example, an isooxazolone compound, oxazolone compound, thionaphthene compound, pyrazolone compound, barbituric acid compound, hydantoin compound, and rhodanine compound having an active methylene group adjacent to a carbonyl group in the molecule. Y₂₁ and Y₂₂ represent the same or different hetero atoms selected from XVI group elements in the periodic table such as, for example, an oxygen atom, sulfur atom, selenium atom, and tellurium atom.

The azo metallic complex represented by the general formula is usually used in the form of metallic complex in which one or more of them are coordinated to a metal (center atom). Examples of metal elements as the center atom include scandium, yttrium, titanium, zirconium, hafnium, vanadium, niobium, tantalum, chromium, molybdenum, tungsten, manganese, technetium, rhenium, iron, ruthenium, osmium, cobalt, rhodium, iridium, nickel, palladium, platinum, copper, silver, gold, zinc, cadmium, and mercury, and particularly, cobalt is preferable. X₂ in the general formula represents an appropriate cation typically including onium ions such as, for example, an alkylammonium ion, pyridinium ion, and quinolinium ion.

Examples of these Us are shown in FIGS. 3, 10 and 12.

An example of W is shown in FIG. 4.

The organometallic complex Y is an azoporphyrin complex, and an examples of this complex is shown in FIG. 6. The organometallic complex Y provides the same dye even if it is in the form of the organometallic complex V. V represents a formazane metallic complex, and its structure is shown in FIG. 5.

The dye C is a mixed dye of an organometallic complex Y and an organometallic complex cation-anion U constituted of a cation and an organometallic complex anion.

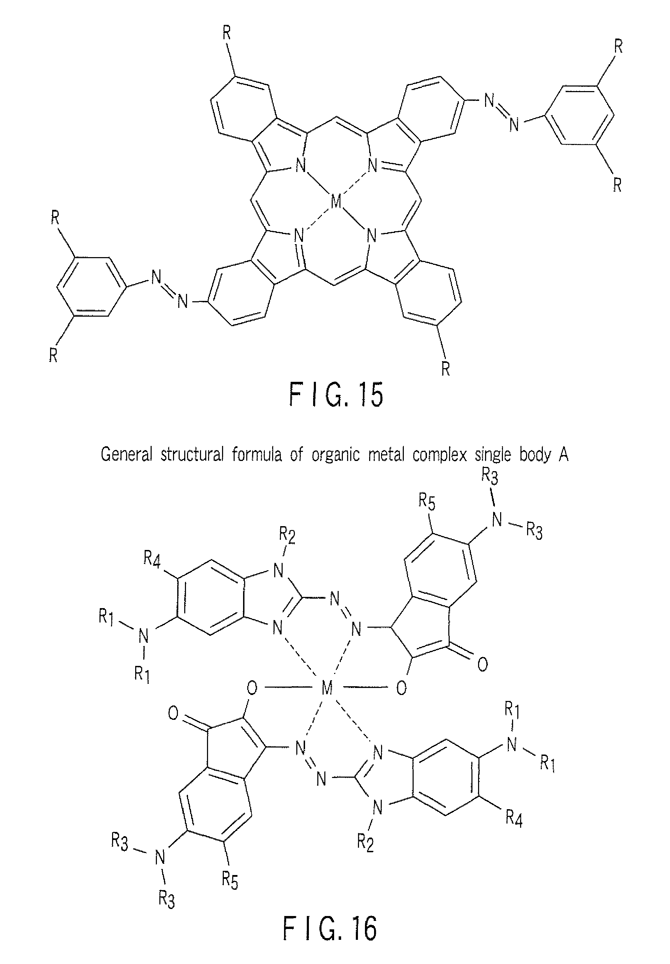

The dyes D, E and H are azo organometallic complexes. The general formula is shown in FIG. 16.

As M, mainly used are Cu, Zn, Ni, Co Fe, Sc, Ti, V, Cr, Mn, Al, Gd, Y and the like, and Cu has the best reproduction light durability. Used as R₁ to R₅ include, but not limited to, CH₃, C₂H₅, H, CH₂N(CH₃)₂, SCH₃, NO₂, Cl, SO₂NHCH₃, CN, and CH₃OCH₂. Particularly when Cl is added, reproduction light durability is best. In the present example, organometallic complexes as shown in FIGS. 7, 8 and 11 among them were used.

The dye F is a mixed dye of an organometallic complex single body Y with an organometallic complex cation-anion U constituted of a cation and an organometallic complex anion. The organometallic complex single body Y used in the embodiment was specifically an azo metallic complex represented by the general formula shown in FIG. 16. FIG. 9 shows one example thereof.

The dye G is an organometallic complex cation-anion U constituted of a cation and an organometallic complex anion. FIG. 10 shows one example thereof.

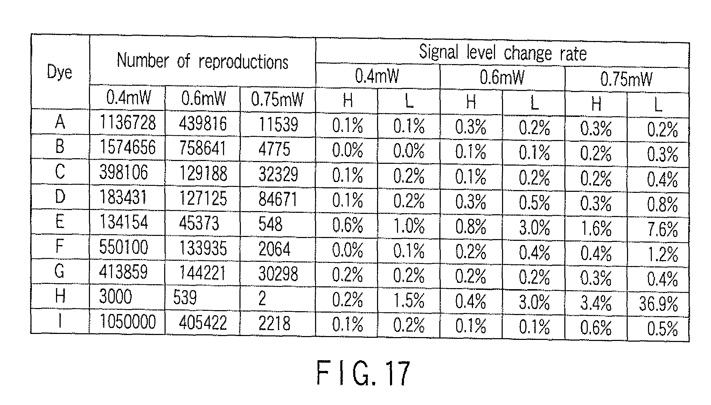

Recording was carried out by using the dyes A to I. These dyes were of so-called L-H recording type showing increase in reflectance after recording. Its recorded signal was reproduced at a laser power of 0.4 mW, 0.6 mW and 0.75 mW. Results of measurement of the possible number of reproductions and the change rate of signal level at each reproduction power are shown in FIG. 17. H represents a change rate of signal level at a mark portion and L represents a change rate of signal level at a space portion.

Here, the possible number of reproductions is the number of reproductions until earliest time among time when the modulation degree reaches lower than 0.4, time when SbER reaches higher than 5.0 x 10⁻⁵, and time when PRSNR reaches lower than 15, while the same track is reproduced continuously at each reproduction power. The modulated amplitude is (I_{11H}-I_{11L})/I_{11H}. I_{11H} represents a reproduction signal level at a mark portion and I_{11L} represents a reproduction signal level at a space portion. A method of defining and measuring SbER is described in a book which can be purchased from DVD format logo licensing K.K. It is a part of Annex H of DVD Specifications for High Density Read-Only Disc PART 1 Physical Specifications Version 0.9. A method of defining and measuring PRSNR is described in a book which can be purchased from DVD format logo licensing K.K. It is a part of Annex H of DVD Specifications for High Density Read-Only Disc PART 1 Physical Specifications Version 0.9. PRSNR and SbER are measured under a condition in which information is recorded also in an adjacent track.

The signal level change rate is defined by a change rate of signal level in reproduction of multi-times. Here, the term "multi-times" means 1,000 times. However, a change of signal level per 1,000 times from immediately after initiation of repeated reproduction until several thousands times, and a change of signal level per 1,000 times around several decades thousands times after initiation of repeated reproduction are different, and the change of signal level is largest immediately after initiation of reproduction. For compensating irregularity of this change of signal level per 1,000 times, in the present application, a change of signal level per 10,000 times is measured at each reproduction power and its measured value is multiplied by 1/10, and thus, the signal level change rate is defined as described below.

Signal level change rate = |(level after 10,000 times reproduction - initial level)/initial level/101

The initial level includes I_{11H} level and I_{11L} level measured before conducting reproduction of 10,000 times, and the level after reproduction of 10,000 times includes I_{11H} level and I_{11L} level measured after reproduction of 10,000 times.

Assuming that the standard reproduction power is 0.4 mW, a reproduction power at 0.6 mW is 1.5 times of the standard reproduction power, and a reproduction power at 0.75 mW is 1.9 times of the standard reproduction power.

From the standpoint of forming stricter conditions for checking variation to find an information storage medium of higher reproduction light durability, a reproduction power for measurement is preferably 1.5 times of the standard reproduction power, and further preferably 1.9 times of the standard reproduction power.

In the dye H, the signal level change rate at the standard reproduction power increased over 1%. In the dye H, the reproduction possible number (at the standard reproduction power) is 3,000, not reaching intended 100,000.

In the dyes H and E, the signal level change rate at 1.5 times of the standard reproduction power increased over 1%. In other dyes (dyes having a signal level change rate not over 1%), the reproduction possible number (at the standard reproduction power) was as excellent as 100,000 or more.

In the dyes E, F and H, the signal level change rate at 1.9 times of the standard reproduction power increased over 1%. In other dyes (dyes having a signal level change rate not over 1%), the reproduction possible number (at the standard reproduction power) was as excellent as 100,000 or more.

As described above, according to this embodiment, is has been found that a reproduction possible number of 100,000 can be attained when a recording film composed of an organic dye having a reproduction signal level change rate in reproduction of 1,000 times at each power of 0.1% or more and 1% or less is used.

It is possible to use a dye in which a difference between a change rate of signal level of a low reflectance portion in reproduction of 1,000 times and a change rate of signal level of a high reflectance portion in reproduction of 1,000 times is almost zero. When such an information storage medium is used, the modulation degree can be kept and a signal S/N can be maintained even if a level reproduction signal level changes.

According to an embodiment of the information storage medium, a reflectance level of the information storage medium increases after recording. A reflectance level of the information storage medium increases after reproduction of multi-times.

The laser wavelength used for recording or reproduction may be 450 nm or less.

As the recording film material, a dye is used. This dye may be a mixture of two or more molecules.

While certain embodiments of the inventions have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions. For example, in the embodiment, the dyes A to I are used as representative examples, but the present invention is not limited thereto. Results satisfying the present invention were obtained even if dyes having an analogous basal skeleton and having a different substituent, and dyes containing a different center metal were particularly used. Further, the dyes may be used singly, and excellent results were obtained when several dyes were used in admixture.

In the embodiment, the modulation degree, SbER and PRSNR were used as indices to be evaluated, but the present invention is not limited thereto. Signal evaluation indices such as error rate, jitter, and PI error can be used, obtaining analogous results.

In the embodiment, recording of L-H showing increase in reflectance after recording was carried out, but the present invention is not limited thereto. Even in the case of an information storage medium which can be recorded with High to Low showing decrease in reflectance after recording, it is important to suppress signal level variation also in this case of realizing a reproduction possible number of 100,000 times or more.

The maximum absorption wavelength of the dye used in the embodiment was 405 nm or more, and this maximum absorption wavelength depends on the recording and reproduction laser wavelength. When the laser wavelength changes, the optimum maximum absorption wavelength changes accordingly. In the case of a dye which can be recorded with High to Low showing decrease in reflectance after recording, the maximum absorption wavelength is often shorter than the recording and reproduction laser wavelength.

In the embodiment, the laser wavelength in recording was 405 nm and the numerical aperture was 0.65, but the present invention is not limited thereto. Those showing a larger numerical aperture of 0.85 and those showing a laser wavelength of, for example, 650 nm and 251 nm, particularly 200 nm to 680 nm, are effective.

In the embodiment, a structure obtained by pasting a 0.6 mm transparent resin substrate was adopted as the disc structure, but the present invention is not limited thereto. It is also possible to use a material other than polycarbonate and having high transmittance at the recording wavelength. It is also possible that a reflection film and a dye film are formed on a 1.1 mm substrate, and a 0.1 mm cover layer is applied.

In this embodiment, a structure in which only one recording film is provided was adopted as the disc structure, but the present invention is not limited thereto. It is also possible to use a structure containing two or more recordable layers.

## Claims

1. An information storage medium comprising a substrate having a groove in a form of concentric circle or spiral and a recording film formed on the substrate, **characterized in that**
a change rate of signal level in reproduction of 1,000 times at a predetermined power is 0.1% or more and 1% or less.

2. The information storage medium according to claim 1, **characterized in that** the predetermined power is 1.5 times of a laser power necessary for reproduction.

3. The information storage medium according to claim 1, **characterized in that** the predetermined power is 1.9 times of a laser power necessary for reproduction.

4. The information storage medium according to claim 1, **characterized in that** a difference between a change rate of signal level of a low reflectance portion in reproduction of 1,000 times and a change rate of signal level of a high reflectance portion in reproduction of 1,000 times is 0.5% or less.

5. The information storage medium according to claim 1, **characterized in that** the recording film is formed of a material showing increase in reflectance after recording.

6. The information storage medium according to claim 1, **characterized in that** the recording film is formed of a material showing increase in reflectance after reproduction of 1,000 times.

7. The information storage medium according to claim 1, **characterized in that** information is recorded by using a laser beam having a wavelength of 450 nm or less.

8. The information storage medium according to claim 1, **characterized in that** the recording film contains a dye.

9. The information storage medium according to claim 1, **characterized in that** the recording film contains a dye composed of two or more molecules.

10. A method of reproducing information recorded on an information storage medium, the medium comprising a substrate having a groove in a form of concentric circle or spiral and a recording film formed on the substrate, wherein a change rate of signal level in reproduction of 1,000 times at a predetermined power is 0.1% or more and 1% or less, the method **characterized by** comprising:
irradiating the information storage medium with a laser beam; and
reproducing information based on reflected light of the irradiated laser beam.

11. A method of recording information on an information storage medium, the medium comprising a substrate having a groove in a form of concentric circle or spiral and a recording film formed on the substrate, wherein a change rate of signal level in reproduction of 1,000 times at a predetermined power is 0.1% or more and 1% or less, the method **characterized by** comprising:
irradiating the information storage medium with a laser beam to record information.
